# EUROPEAN PATENT SPECIFICATION

(11) **EP 2 236 554 B1**
(45) Date of publication and mention of the grant of the patent: **07.08.2013**
(21) Application number: 08865932.1
(22) Date of filing: 26.12.2008
(51) Int. Cl.: C08L 15/00, B60C 1/00, C08F 8/42, C08K 3/04, C08K 3/36, C08K 5/548

(54) **TIRE**
REIFEN
BANDAGE DE ROUE

(30) Priority: 28.12.2007 JP 2007340867
(43) Date of publication of application: 06.10.2010
(73) Proprietor: Bridgestone Corporation, Tokyo 104-8340 (JP)
(72) Inventor: SASAKA, Naohiro, Kodaira-shi Tokyo 187-8531 (JP); KIMURA, Takumi, Kodaira-shi Tokyo 187-8531 (JP)
(74) Representative: Waldren, Robin Michael
(86) International application number: PCT/JP2008/073815
(87) International publication number: WO 2009/084667

(56) References cited:
- EP-A1- 1 721 930
- WO-A1-99/09036
- WO-A1-03/048216
- WO-A1-2005/085343
- WO-A1-2007/019561
- JP-A- 2003 253 051
- JP-A- 2006 137 858
- JP-A- 2007 246 573
- JP-A- 2007 284 482

## Description

### TECHNICAL FIELD

The present invention relates to a tire and more particularly to a tire using a rubber composition for a tread, wherein the rubber composition comprises a styrene-butadiene copolymer modified with an amine-based functional group and a specific silica and can provide a tire exhibiting excellent abrasion resistance in combination with decreased rolling resistance and excellent steering stability.

### BACKGROUND ART

As the decrease in the fuel cost is required for automobiles recently, a rubber material providing a combination of a small rolling resistance, excellent abrasion resistance and excellent steering stability which is typically expressed by excellent wet skid resistance is desired as the rubber material for tires.
It is known that the rolling resistance of a tire can be decreased by decreasing hysteresis loss of a vulcanized rubber. As the rubber material exhibiting small hysteresis loss, natural rubber, polyisoprene rubber and polybutadiene rubber are known. However, these rubbers have a drawback in that the wet skid resistance is small.
As the method for decreasing the hysteresis loss without adversely affecting the wet skid resistance, it is proposed that a functional group is introduced into the chain end of polymerization of styrene-butadiene copolymers having various structures obtained by polymerization using an organolithium initiator in a hydrocarbon solvent. For example, styrene-butadiene copolymers obtained by modifying or coupling the chain end of polymerization with a tin compound and styrene-butadiene copolymers obtained by modifying the chain end of polymerization with an isocyanate compound are known. These modified polymers provide the effect of exhibiting decreased hysteresis loss in combination with excellent abrasion resistance and fracture property without adverse effects on the wet skid resistance in compositions comprising carbon black as the reinforcing material, in particular.

Recently, as the rubber material for tires, the use of a rubber composition comprising silica or a mixture of silica and carbon black as the reinforcing material is proposed. Tire treads comprising silica or a mixture of silica and carbon black exhibit small rolling resistance and excellent steering stability which is typically expressed by the wet skid resistance. However, these treads have a drawback in that vulcanized products of these treads exhibit small tensile strength and abrasion resistance. Although the modified styrene-butadiene copolymers described above provide rubber materials for tires exhibiting excellent abrasion resistance and fracture property when carbon black is used as the reinforcing material, the effect of the improvement is small when silica is used as the reinforcing material.
For the purpose of improving tensile strength and abrasion resistance of a vulcanizate comprising silica or a mixture of carbon black and silica, various rubber compositions comprising modified polymers in which functional groups exhibiting affinity with silica are introduced have been proposed.

Although improvement in the physical properties can be achieved to some extent by using the modified polymers described above for compositions comprising silica or a mixture of silica and carbon black, the improvement in tensile strength and abrasion resistance of vulcanized compositions is not sufficient. In particular, the decrease in the hysteresis loss becomes insufficient as the relative amount of carbon black in compositions comprising silica and carbon black is increased.
Polymers into which amino group is introduced are known as the modified polymer effective for compositions comprising carbon black and compositions comprising silica. For compositions comprising carbon black, polymers in which amino group is introduced into the chain end of polymerization using a lithium amide initiator are proposed (for example, refer to Patent Document 1). For compositions comprising silica, diene-based rubbers into which amino group is introduced are proposed (for example, refer to Patent Document 2).
The polymers obtained in accordance with the above methods can achieve improvements in various properties to some extent in compositions comprising carbon black and compositions comprising silica. However, in the references shown above, nothing other than general descriptions can be found on the relation between the structure of the polymers themselves and various properties while the references mainly describe the processes for introducing amino group into the polymer specifically.
For further decreasing the rolling resistance, the particle diameter of carbon black or silica used as the filler may be increased. The hysteresis loss can be decreased due to this effect, and the rolling resistance can be decreased. However, this process has a drawback in that the abrasion resistance is decreased.

[Patent Document 1] Japanese Patent Application Laid-Open No. 53616/1995
[Patent Document 2] Japanese Patent Application Laid-Open No. 71687/1997
Reference is also made to EP1721930 and W02007/019561.

### DISCLOSURE OF THE INVENTION

### [Problems to be Solved by the Invention]

Under the above circumstances, the present invention has an object of providing a tire using a rubber composition for a tread, wherein the rubber composition can provide a tire exhibiting excellent abrasion resistance in combination with decreased rolling resistance (small heat buildup) and excellent steering stability which is typically expressed by the wet skid resistance.

### [Means for Solving the Problems]

As the result of intensive studies by the present inventors to achieve the above object, it was found that the object could be achieved by using, for a tread, a rubber composition comprising a styrene-butadiene copolymer modified by introducing an amine-based functional group and silica having a specific particle diameter. The present invention has been completed based on the knowledge.
The present invention provides:
[1] A tire having a tread which contains a rubber composition for a tread, the rubber composition comprising (A) a rubber component comprising 15 to 70% by mass of a styrene-butadiene copolymer modified with an amine-based functional group and (B) silica having a specific surface area by cetyltrimethyl- ammonium bromide (CTAB) adsorption of 60 to 130 m²/g and a specific surface area by nitrogen adsorption (N₂SA) in accordance with the BET method of 70 to 140 m²/g in an amount of 20 to 150 parts by mass based on 100 parts by mass of the rubber component;
[2] A tire having a tread which contains a rubber composition for a tread described in [1], wherein a content of entire styrene units in the styrene-butadiene copolymer modified with an amine-based functional group is 20 to 40% by mass;
[3] A tire having a tread which contains a rubber composition for a tread described in any one of [1] and [2], wherein the styrene-butadiene copolymer modified with an amine-based functional group has a protonic amino group and/or a protected amino group as the amine-based functional group;
[4] A tire having a tread which contains a rubber composition for a tread described in [3], wherein the styrene-butadiene copolymer modified with an amine-based functional group further has a hydrocarbyloxysilane group;
[5] A tire having a tread which contains a rubber composition for a tread described in [4], wherein the styrene-butadiene copolymer modified with an amine-based functional group has a protonic amino group and/or a protected amino group and a hydrocarbyloxysilane group at the ends of polymer;
[6] A tire having a tread which contains a rubber composition for a tread described in [5], wherein the styrene-butadiene copolymer modified with an amine-based functional group has a protonic amino group and/or a protected amino group and a hydrocarbyloxysilane group at a same end of polymer;
[7] A tire having a tread which contains a rubber composition for a tread described in any one of [3] to [6], wherein the protonic amino group and/or the protected amino group is at least one group selected from -NH₂, -NHR^{a}, -NL¹L² and -NR^{b}L³, wherein R^{a} and R^{b} each represent a hydrocarbon group, and L¹, L² and L³ each represent hydrogen atom or a dissociable protective group;
[8] A tire having a tread which contains a rubber composition for a tread described in any one of [1] to [7], wherein a content of vinyl bond in a butadiene portion in the styrene-butadiene copolymer modified with an amine-based functional group is 18 to 35%;
[9] A tire having a tread which contains a rubber composition for a tread described in any one of [3] to [8], wherein the styrene-butadiene copolymer modified with an amine-based functional group is obtained by reacting active ends of a styrene-butadiene copolymer with a compound having a protected amino group and a hydrocarbyloxysilane group in a molecule to modify the copolymer;

[10] A tire having a tread which contains a rubber composition for a tread described in [9], wherein the compound having a protected amino group and a hydrocarbyloxysilane group in a molecule is a difunctional silicon compound having a protected primary amino group;
[11] A tire having a tread which contains a rubber composition for a tread described in [10], wherein the compound having a difunctional silicon atom is at least one compound selected from silicon compounds represented by general formula (I): 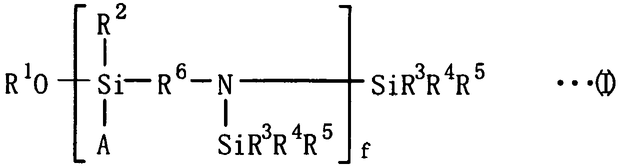 wherein R¹ and R² each independently represent a hydrocarbon group having 1 to 20 carbon atoms, R³ to R⁵ each independently represent a hydrocarbon group having 1 to 20 carbon atoms, R⁶ represents a divalent hydrocarbon group having 1 to 12 carbon atoms, A represents a halogen atom or a hydrocarbyloxy group having 1 to 20 carbon atoms, and f represents an integer of 1 to 10;
   silicon compounds represented by general formula (II): 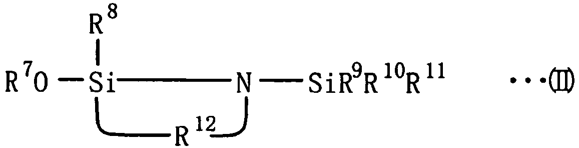 wherein R⁷ to R¹¹ each independently represent a hydrocarbon group having 1 to 20 carbon atoms, and R¹² represents a divalent hydrocarbon group having 1 to 12 carbon atoms; and
   silicon compounds represented by general formula (III): 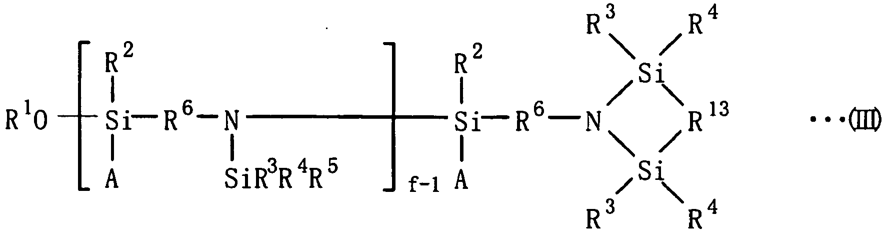 wherein R¹ and R² each independently represent a hydrocarbon group having 1 to 20 carbon atoms, R³ to R⁵ each independently represent a hydrocarbon group having 1 to 20 carbon atoms, R⁶ represents a divalent hydrocarbon group having 1 to 12 carbon atoms, R¹³ represents a divalent hydrocarbon group having 1 to 12 carbon atoms; A represents a halogen atom or a hydrocarbyloxy group having 1 to 20 carbon atoms, and f represents an integer of 1 to 10;
[12] A tire having a tread which contains a rubber composition for a tread described in any one of [9] to [11], wherein the styrene-butadiene copolymer modified with an amine-based functional group is obtained by reacting active ends of a styrene-butadiene copolymer with a compound having a protected amino group and a hydrocarbyloxysilane group in a molecule to modify the copolymer, followed by conducting condensation reaction involving said compound in a presence of a titanium-based condensation promoter comprising a titanium compound;
[13] A tire having a tread which contains a rubber composition for a tread described in [12], wherein the titanium-based condensation promoter is at least one compound selected from alkoxides, carboxylic acid salts and acetylacetonate complex salts of titanium;
[14] A tire having a tread which contains a rubber composition for a tread described in any one of [1] to [13], wherein the rubber composition comprises (C) a silane coupling agent in an amount of 2 to 20% by mass based on an amount of silica of Component (B);
[15] A tire having a tread which contains a rubber composition for a tread described in [14], wherein the silane coupling agent of Component (C) is represented by following general formula (IV):

   R¹⁴_{X}R¹⁵_{Y}R¹⁶_{Z}SiR¹⁷-S-CO-R¹⁸ (IV)

   wherein R¹⁴ represents a group represented by R¹⁹O-, R¹⁹C(=O)O-, R¹⁹R²⁰C=NO-, R¹⁹R²⁰N- or -(OSiR¹⁹R²⁰)m(OSiR¹⁸R¹⁹R²⁰), R¹⁹ and R²⁰ each independently representing hydrogen atom or a monovalent hydrocarbon group having 1 to 18 carbon atoms; R¹⁵ represents a group represented by R¹⁴, hydrogen atom or a monovalent hydrocarbon group having 1 to 18 carbon atoms; R¹⁶ represents a group represented by R¹⁴ or R¹⁵ or a group represented by -[O(R²¹O)ₐ]_{0,5}-, R²¹ representing an alkylene group having 1 to 18 carbon atoms, and a representing an integer of 1 to 4; R¹⁷ represents a divalent hydrocarbon group having 1 to 18 carbon atoms; R¹⁸ represents a monovalent hydrocarbon group having 1 to 18 carbon atoms; and **x**, **y** and **z** represent numbers satisfying relations of **x**+**y**+2**z**=3, 0≦**x**≦3, 0≦**y**≦2 and 0≦**z**≦1; and
[16] A tire having a tread which contains a rubber composition for a tread described in any one of [1] to [15], wherein the rubber composition further comprises (D) carbon black.

### [Effects of the invention]

The rubber composition of the present invention which is used for a tread for a tire and comprises the modified styrene-butadiene copolymer and silica having the specific particle diameter (a great particle diameter) exhibits the following effects:
(1) The rubber composition used for a tread of a tire of the present invention can provide a tire exhibiting excellent abrasion resistance in combination with small heat buildup and excellent steering stability since the rubber composition comprises the styrene-butadiene copolymer modified with an amine-based functional group and silica having a specific particle diameter (a great particle diameter) in specific amounts.
(2) The effect described in (1) can be exhibited more remarkably when the content of the entire styrene units and the content of the vinyl bond in the butadiene portion in the modified copolymer are in specific ranges.
(3) From the standpoint of increasing the interaction with both of silica and carbon black, it is preferable that the modified copolymer has a protonic amino group and/or a protected amino group as the amine-based functional group and has a hydrcarbyloxysilane group. In this case, excellent interactions with silica and carbon black can be exhibited in all of the compositions comprising silica, compositions comprising carbon black and compositions comprising silica and carbon black, and the abrasion resistance and the property of exhibiting small heat buildup can be further improved.
(4) The effect described in (3) can be exhibited more effectively when the modified copolymer has a protonic amino group and/or a protected amino group and a hydrocarbyloxysilane group on the chain ends of polymerization, and still more effectively when the modified copolymer has these functional groups on the same the chain end of polymerization.
(5) A tire exhibiting improved abrasion resistance, small heat buildup and excellent steering stability can be obtained by using, for the tread rubber, the rubber composition comprising the silica described above or a combination of the silica and carbon black as the reinforcing fillers.

### BEST MODE FOR CARRYING OUT THE INVENTION

The modified styrene-butadiene copolymer used in the present invention will be described in the following.

### [Modified styrene-butadiene copolymer]

The modified styrene-butadiene copolymer used in the present invention (hereinafter, referred to as the modified SBR, occasionally) is **characterized in that** the copolymer is modified with an amine-based functional group.
In the modified SBR, the position in the polymer at which the amine-based functional group is introduced is not particularly limited and may be any of the end of polymer and side chains of the polymer chain. It is preferable that the functional group is introduced at the end of polymer from the standpoint of the easiness of the introduction and the effect of improvement in the property of exhibiting small heat buildup by suppressing the energy loss at the end of polymer.
As the amine-based functional group, a protonic amino group and/or a protected amino group can be used. In the modified SBR, it is preferable that the copolymer further has a hydrocarbyloxysilane group in the copolymer in combination with the protonic amino group and/or the protected amino group.
It is preferable that the functional groups are introduced at the chain end of polymerization and more preferably at the same chain end of polymerization due to the same reasons as those described above.
The protonic amino group, the protected amino group, the hydrocarbyloxysilane group and the compound having the functional groups described above (hereinafter, referred to as a modifier, occasionally) used for the modification of SBR of the base material (hereinafter, referred to as SBR or unmodified SBR, occasionally) will be described specifically below.
As the process for producing the modified SBR of the present invention, the process in which SBR having active ends is obtained and, then, the modified SBR is produced by the reaction with the modifier, can be used.

### (Production of SBR)

In the present invention, SBR having active chain ends can be obtained by copolymerization of styrene and butadiene. The process for the copolymerization is not particularly limited, and any of the solution polymerization, the gas-phase polymerization and the bulk polymerization can be used. The solution polymerization is preferable, in particular. The type of the polymerization may be any of the batch polymerization and the continuous polymerization.
It is preferable that the metal at the active portion present in the molecule of SBR is one metal selected from alkali metals and alkaline earth metals and more preferably from alkali metals. The metal is most preferably lithium metal.
In the solution polymerization, for example, the polymer of the object can be produced by anionic polymerization of styrene and butadiene using an organoalkali metal compound, in particular, a lithium compound, as the initiator.
When the solution polymerization is conducted, it is preferable that the concentration of the monomers in the solvent is 5 to 50% by mass and more preferably 10 to 30% by mass. It is preferable that the amount of styrene is in the range of 20 to 40% by mass and more preferably 25 to 40% by mass based on the sum of the amounts of styrene and butadiene.

The lithium compound is not particularly limited, and it is preferable that hydrocarbyllithiums and lithium amide compounds are used. When the hydrocarbyllithium is used, SBR having a hydrocarbyl group at the chain end of initiation of the polymerization and the active portion of polymerization at the other chain end can be obtained. When the lithium amide compound is used, SBR having a group having nitrogen at the chain end of initiation of the polymerization and the active portion of polymerization at the other chain end can be obtained.

As the hydrocarbyllithium, compounds having hydrocarbyl groups having 2 to 20 carbon atoms are preferable. Example of the compound described above include ethyllithium, n-propoyllithium, isoproyllithium, n-butyllithium, sec-butyllithium, tert-octyllithium, n-decyllithium, phenyllithium, 2-naphthyllithium, 2-butylphenyllithium, 4-phenylbutyllithium, cyclohexyllithium, cyclobenzyllithium and reaction products of diisopropenylbenzene and butyllithium. Among these compounds, n-butyllithium is preferable.

Examples of the lithium amide compound include lithium hexamethylenimide, lithium pyrrolidide, lithium piperidide, lithium heptamethylenimide, lithium decamethylenimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium N-methylpiperazide, lithium ethylpropylamide, lithium ethylbutylamide, lithium ethylbenzylamide and lithium methylphenetylamide. From the standpoint of the effect of interaction with carbon black and the ability of initiating the polymerization, cyclic lithium amides such as lithium hexamethylenimide, lithium pyrrolidide, lithium piperidide lithium heptamethylenimide and lithium dodecamethylenimide are preferable, and lithium hexamethylenimide and lithium pyrrolidide are more preferable among these compounds.

As the lithium amide compound, in general, a compound prepared in advance from a secondary amine and a lithium compound can be used for the polymerization. The lithium amide compound may be prepared in the polymerization system (in-situ). It is preferable that the amount of the polymerization initiator is selected in the range of 0.2 to 20 mmol based on 100 g of the monomers.
The process for producing SBR in accordance with the anionic polymerization using the lithium compound described above as the polymerization initiator is not particularly limited, and a conventional process can be used.
Specifically, the objective SBR can be obtained by anionic polymerization of styrene and butadiene using the lithium compound as the polymerization initiator in an organic solvent inert to the reaction, for example, in a hydrocarbon-based solvent such as an aliphatic hydrocarbon compound, an alicyclic hydrocarbon compound and an aromatic hydrocarbon compound in the presence of a potassium compound or a randomizer which is used by request.

The randomizer which is used by request is a compound which exhibits the functions of controlling the microstructure of the SBR such as the increase in the content of the 1,2-bond in the butadiene portion and controlling the distribution of the monomer units such as randomization of the butadiene unit and the styrene unit. The randomizer is not particularly limited, and a suitable compound can be selected from conventional compounds widely used as the randomizer. Examples of the randomizer include ethers and tertiary amines such as dimethoxybenzene, tetrahydrofuran, dimethoxyethane, diethylene glycol dibutyl ether, diethylene glycol dimethyl ether, 2,2-bis(2-tetrahydrofuryl)propane, triethylamine, pyridine, N-methylmorpholine, N,N,N',N'-tetramethylethylenediamine and 1,2-dipiperidinoethane. Potassium salts such as potassium t-amylate and potassium t-butoxide and sodium salts such as sodium t-amylate can also be used.
The randomizer may be used singly or in combination of two or more. It is preferable that the amount of the randomizer is selected in the range of 0.01 to 1,000 mole equivalent based on 1 mole of the lithium compound.

It is preferable that the temperature of the polymerization reaction is selected in the range of 0 to 150°C and more preferably 20 to 130°C. The polymerization can be conducted under a pressure formed by the reaction. In general, it is preferable that the polymerization is conducted under a pressure which can keep the monomers substantially in the liquid phase. In other words, an added pressure can be used where desired although the pressure is varied depending on individual substances and the solvent which are used for the polymerization and the temperature of the polymerization. The added pressure can be obtained by a suitable method such as applying an additional pressure to the reactor with a gas inert to the polymerization.

In this polymerization, it is preferable that materials from which substances adversely affecting the reaction such as water, oxygen, carbon dioxide and protonic compounds have been removed are used for the entire raw materials taking part in the polymerization such as the polymerization initiator, the potassium compound, the randomizer, the solvent and the monomers.
It is preferable that the obtained SBR has a glass transition temperature (Tg) of -95 to -15°C as obtained in accordance with the differential scanning calorimetry. When the glass transition temperature is in the above range, an increase in viscosity is suppressed, and SBR which can be easily handled can be obtained.

### (Modification of SBR)

In the present invention, an amine-based functional group such as a protonic amino group and/or a protected amino group and, preferably, a protonic amino group and/or a protonic amino group and a hydrocarbyloxysilane group are introduced into the end of SBR having the active end obtained as described above by bringing a prescribed modifier into reaction with the active ends. It is preferable that the protonic amino group and/or the protected amino group and the hydrocarbyloxysilane group are introduced into the same end of polymer.
The protonic amino group and/or the protected amino group is, for example, at least one group selected from -NH₂, -NHR^{a}, -NL¹L² and -NR^{b}L³, wherein R^{a} and R^{b} each represent a hydrocarbon group, and L¹, L² and L³ each represent hydrogen atom or a dissociable protective group.
Examples of the hydrocarbon group represented by R^{a} or R^{b} include various types of alkyl groups, alkenyl group, aryl groups and aralkyl groups. The group represented by L¹, L² or L³ is not particularly limited as long as the group is an easily dissociable protective group, examples of which include groups described below.

### <Modifier>

In the present invention, the polymer having the protonic amino group and/or the protected amino group and the hydrocarbyloxysilane group introduced into the same end of polymer is preferable as the modified SBR. Therefore, it is preferable that a difunctional silicon compound having a protected primary amino group in the same molecule is used as the modifier.
Examples of the difunctional silicon compound having a protected primary amino group in the same molecule include compounds represented by general formula (I), general formula (II) or general formula (III).

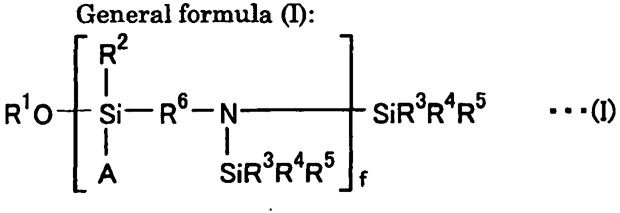

In the above general formula (I), R¹ and R² each independently represent a hydrocarbon group having 1 to 20 carbon atoms, R³ to R⁵ each independently represent a hydrocarbon group having 1 to 20 carbon atoms, R⁶ represents a divalent hydrocarbon group having 1 to 12 carbon atoms, A represents a halogen atom or a hydrocarbyloxy group having 1 to 20 carbon atoms, and f represents an integer of 1 to 10.

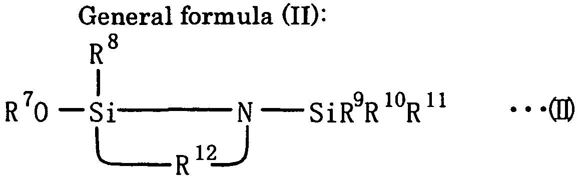

In the above general formula (II), R⁷ to R¹¹ each independently represent a hydrocarbon group having 1 to 20 carbon atoms, and R¹² represents a divalent hydrocarbon group having 1 to 12 carbon atoms.

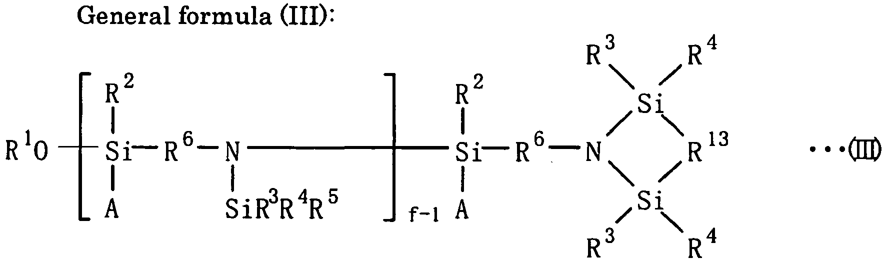

In the above general formula (III), R¹ and R² each independently represent a hydrocarbon group having 1 to 20 carbon atoms, R³ to R⁵ each independently represent a hydrocarbon group having 1 to 20 carbon atoms, R⁶ represents a divalent hydrocarbon group having 1 to 12 carbon atoms, R¹³ represents a divalent hydrocarbon group having 1 to 12 carbon atoms; A represents a halogen atom or a hydrocarbyloxy group having 1 to 20 carbon atoms, and f represents an integer of 1 to 10.

In the above general formula (I) to (III), examples of the monovalent hydrocarbon group having 1 to 20 carbon atoms described above include methyl group, ethyl group, n-propyl group, isopropyl group, n-butyl group, isobutyl group, sec-butyl group, tert-butyl group, various types of pentyl groups, various types of hexyl groups, various types of octyl groups, various types of decyl groups, various types of dodecyl groups, various types of tetradecyl groups, various types of hexadecyl groups, various types of octadcyl groups, various types of icosyl groups, cyclopentyl group, cyclohexyl group, vinyl group, propenyl group, allyl group, hexenyl group, octenyl group, cyclopentenyl group, cyclohexenyl group, phenyl group, tolyl group, xylyl group, naphthyl group, benzyl group, phenetyl group and naphthylmethyl group. Among these groups, groups having 1 to 4 carbon atoms such as methyl group, ethyl group, n-propyl group, isopropyl group, n-butyl group, isobutyl group, sec-butyl group and tert-butyl group are preferable, and ethyl group, methyl group and tert-butyl group are more preferable.
Examples of the divalent hydrocarbon group having 1 to 12 carbon atoms include alkylene groups having 1 to 12 carbon atoms, arylene groups having 6 to 12 carbon atoms and arylenealkylene groups having 7 to 12 carbon atoms.
The alkylene group having 1 to 12 carbon atoms may be any of a linear group and a branched group. Examples of the alkylene group include linear alkylene groups such as methylene group, ethylene group, trimethylene group, tetramethylene group, hexamethylene group, octamethylene group and decamethylene group; and branched alkylene groups such as propylene group, isopropylene group, isobutylene group, 2-methyltrimethylene group, isopentylene group, isohexylene group, isooctylene group, 2-ethylhexylene group and isodecylene group.
Examples of the arylene group having 6 to 12 carbon atoms include phenylene group, methylphenylene group, dimethylphenylene group and naphthylene group. Examples of the arylenealkylene group having 7 to 12 carbon atoms include phenylenemethylene group, phenyleneethylene group and xylylene group. Among these groups, alkylene groups having 1 to 4 carbon atoms are preferable, and trimethylene group is more preferable.
Group A is a reactive group selected from halogen atoms and hydrocarbyloxy groups having 1 to 20 carbon atoms are preferable. Examples of the halogen atom include fluorine atom, chlorine atom, bromine atom and iodine atom. Chlorine atom is preferable among these atoms.
Examples of the hydrocarbyloxy group having 1 to 20 carbon atoms include alkoxy groups having 1 to 20 carbon atoms, aryloxy groups having 6 to 20 carbon atoms and aralkyloxy groups 7 to 20 carbon atoms.
Examples of the alkoxy group having 1 to 20 carbon atoms include methoxy group, ethoxy group, n-propoxy group, n-butoxy group, isobutoxy group, sec-butoxy group, tert-butoxy group, various types of hexoxy groups, various types of octoxy groups, various types of decyloxy groups, various types of dodecyloxy groups, various types of tetradecyloxy groups, various types of hexadecyloxy groups, various types of octadecyloxy groups and various types of icosyloxy groups. Examples of the aryloxy group having 6 to 20 carbon atoms include phenoxy group, methylphenoxy group, dimethylphenoxy group and naphthoxy group. Examples of the aralkyloxy group having 7 to 20 carbon atoms include benzyloxy group, phenetyloxy group and naphthylmethoxy group. Among these groups, alkoxy groups having 1 to 4 carbon atoms are preferable, and ethoxy group is more preferable.
Examples of the other reactive group include groups having carboxyl group, residue groups of acid anhydrides, various types of dihydroimidazolinyl groups, N-methylpyrrolidonyl group and isocyanate group.
Two groups represented by two of R³, R⁴ and R⁵ in general formula (I) may be bonded to each other to form a 4- to 7-membered ring in combination with the silicon atom to which the groups are bonded. Two groups represented by two of R⁹, R¹⁰ and R¹¹ in general formula (II) may be bonded to each other to form a 4- to 7-membered ring in combination with the silicon atom to which the groups are bonded. Examples of the 4- to 7-membered ring include rings having methylene group having 4 to 7 carbon atoms.

Examples of the compound having difunctional silicon atom at least having a protected primary amino group and an alkoxy group bonded to silicon atom include N,N-bis(trimethylsilyl)aminopropylmethyldimethoxysilane, N,N-bis(trimethylsilyl)aminopropylmethyldiethoxysilane, N,N-bis-(trimethylsilyl)aminoethylmethyldimethoxysilane, N,N-bis(trimethylsilyl)aminoethylmethyldiethoxysilane and 1-trimethylsilyl-2-ethoxy-2-methyl-1-aza-2-silacyclopentane.
Examples of the compound represented by general formula (I) in which A represents a halogen atom include N,N-bis(trimethylsilyl)-aminopropylmethylmethoxychlorosilane, N,N-bis(trimethylsilyl)aminopropylmethylethoxychlorosilane, N,N-bis(trimethylsilyl)aminoethylmethylmethoxychlorosilane and N,N-bis(trimethylsilyl)aminoethylmethylethoxychlorosilane.
Among these compounds, N,N-bis(trimethylsilyl)aminopropylmethyldimethoxysilane, N,N-bis(trimethylsilyl)aminopropylmethyldiethoxysilane and 1-trimethylsilyl-2-ethoxy-2-methyl-1-aza-2-silacyclopentane are preferable.
The modifier may be used singly or in combination of two or more. The modifier may be a partial condensate.
The partial condensate means a compound obtained by forming SiOSi bond from a portion (not the entire amount) of SiOR in the modifier by condensation.
In the above modification, it is preferable that at least 10% of the polymer chain in the used polymer has the living property.

In the modification with the modifier described above, it is preferable that the amount of the modifier used is 0.5 to 200 mmol/kg·SBR, more preferably 1 to 100 mmol/kg·SBR and most preferably 2 to 50 mmol/kg·SBR. In this description, SBR means the amount by mass of SBR as the polymer alone excluding additives such as antioxidants which are added during or after the preparation. When the amount of the modifier is in the above range, excellent dispersion of fillers can be exhibited, and the fracture property, the abrasion property and the property exhibiting small hysteresis loss after being vulcanized can be improved.
The process for adding the modifier is not particularly limited. The modifier may be added at once in the entire amount, separately in portions or continuously in portions. It is preferable that the modifier is added at once in the entire amount.
The modifier may be bonded to any of the chain end of the initiation of the polymerization, the chain end of the termination of the polymerization, the main chain of the polymer and side chains of the polymer. It is preferable that the modifier is bonded to the chain end of the initiation of the polymerization or the chain end of the termination of the polymerization since the energy loss at the chain end of the polymer can be suppressed, and the property of exhibiting small heat buildup can be improved.

### <Condensation accelerator>

In the present invention, it is preferable that a condensation accelerator is used so that the condensation reaction in which the alkoxysilane compound having the protected primary amino group used as the modifier takes part is promoted.
As the condensation accelerator, a compound having a tertiary amino group or an organic compound having at least one element belonging to any one of Groups 3, 4, 5, 12 , 13, 14 and 15 of the Periodic Table (the Long Period type) can be used. It is preferable that the condensation accelerator is an alkoxide, a carboxylic acid salt or an acetylacetonate complex salt having at least one metal selected from the group consisting of titanium (Ti), zirconium (Zr), bismuth (Bi) and aluminum (Al).
Although the condensation accelerator may be added before the modification, it is preferable that the condensation accelerator is added to the reaction system of the modification during or after the reaction of the modification. When the condensation accelerator is added before the modification, there is the possibility that direct reactions with the active chain ends takes place, and the hydrocarbyloxy group having a protected primary amino group is not introduced into the active chain ends.
As for the time of adding the condensation accelerator, the condensation accelerator is added in 5 minutes to 5 hours after the start of the modification and, preferably in 15 minutes to 1 hour after the start of the modification.

Examples of the condensation accelerator include tetrakis(2-ethyl-1,3-hexanediolato)titanium, tetrakis(2-methyl-1,3-hexanediolato)titanium, tetrakis(2-propyl-1,3-hexanediolato)titanium, tetrakis(2-butyl-1,3-hexanediolato)titanium, tetrakis(1,3-hexanediolato)-titanium, tetrakis(1,3-pentanediolato)titanium, tetrakis(2-methyl-1,3-pentanediolato)titanium, tetrakis(2-ethyl-1,3-pentanediolato)titanium, tetrakis(2-propyl-1,3-pentanediolato)titanium, tetrakis(2-butyl-1,3-pentanediolato)titanium, tetrakis(1,3-heptanediolato)titanium, tetrakis-(2-methyl-1,3-heptanediolato)titanium, tetrakis(2-ethyl-1,3-heptanediolato)titanium, tetrakis(2-propyl-1,3-heptanediolato)titanium, tetrakis-(2-butyl-1,3-heptanediolato)titanium, tetrakis(2-ethylhexoxy)titanium, tetramethoxytitanium, tetraethoxytitanium, tetra-n-propoxytitanium, tetraisopropoxytitanium, tetra-n-butoxytitanium, tetra-n-butoxytitanium oligomers, tetrasiobutoxytitanium, tetra-sec-butoxytitanium, tetra-tert-butoxytitanium, bis(oleate) bis(2-ethylhexanoate)titanium, titanium dipropoxy bis(triethanolaminate) titanium dibutoxy bis(triethanolaminate), titanium tributoxy stearate, titanium tripropoxy stearate, titanium tripropoxy acetylacetonate, titanium dipropoxy bis(acetylacetonate), titanium tripropoxy (ethyl acetoacetate), titanium propoxy acetylacetonate bis(ethyl acetoacetate), titanium tributoxy acetylacetonate, titanium dibutoxy bis(acetylacetonate), titanium tributoxy ethyl acetoacetate, titanium butoxy acetylacetonate bis(ethyl acetoacetate), titanium tetrakis(acetylacetonate), titanium diacetylacetonate bis(ethyl acetoacetate), bis(2-ethylhexanoato)titanium oxide, bis(laurato)titanium oxide, bis(naphthato)titanium oxide, bis(stearato)titanium oxide, bis(oleato)titanium oxide, bis(linolato)-titanium oxide, tetrakis(2-ethylhexanoato)titanium, tetrakis(laurato)-titanium, tetrakis(naphthato)titanium, tetrakis(stearato)titanium, tetrakis(oleato)titanium, tetrakis(linolato)titanium, titanium di-n-butoxide (bis-2,4-pentanedionate), titanium oxide bis(stearate), titanium oxide bis(tetramethylheptanedionate), titanium oxide bis(pentanedionate) and titanium tetra(lactate). Among these compounds, tetrakis(2-ethyl-1,3-hexanendiolato)titanium, tetrakis(2-ethylhexoxy)titanium and titanium di-n-oxide (bis-2,4-pentanedionate) are preferable.

Further examples of the condensation accelerator include tris(2-ethylhexanoato)bismuth, tris(laurato)bismuth, tris(naphthato)-bismuth, tris(stearato)bismuth, tris(oleato)bismuth, tris(linolato)bismuth, tetraethoxyzirconium, tetra-n-propoxyzirconium, tetraisopropoxyzirconium, tetra-n-butoxyzirconium, tetra-sec-butoxyzirconium, tetra-tert-butoxyzirconium, tetra(2-ethylhexyl)zirconium, zirconium tributoxy stearate, zirconium tributoxy acetylacetonate, zirconium dibutoxy bis(acetylacetonate), zirconium tributoxy ethyl acetoacetate, zirconium butoxy acetylacetonate bis(ethyl acetoacetate), zirconium tetrakis-(acetylacetonate), zirconium diacetylacetonate bis(ethyl acetoacetate), bis(2-ethylhexanoato)zirconium oxide, bis(laurato)zirconium oxide, bis(naphthato)zirconium oxide, bis(stearato)zirconium oxide, bis(oleato)-zirconium oxide, bis(oleato)zirconium oxide, bis(linolato)zirconium oxide, tetrakis(2-ethylhexanoato)zirconium, tetrakis(laurato)zirconium, tetrakis-(naphthato)zirconium, tetrakis(stearato)zirconium, tetrakis(oleato)-zirconium and tetrakis(linolato)zirconium.
Still further examples include triethoxyaluminum, tri-n-propoxyaluminum, triisopropoxyaluminum, tri-n-butoxyaluminum, tri-sec-butoxyaluminum, tri-tert-butoxyaluminum, tri(2-ethylhexyl)-aluminum, aluminum dibutoxy stearate, aluminum dibutoxy acetylacetonate, aluminum butoxy bis(acetylacetonate), aluminum dibutoxy ethyl acetoacetate, aluminum tris(acetylacetate), aluminum tris(ethyl acetoacetate), tris(2-ethylhexanoato)aluminum, tris(laurato)-aluminum, tris(naphthato)aluminum, tris(stearato)aluminum, tris(oleato)aluminum and tris(linolate)aluminum.

Among the above condensation accelerators, titanium-based condensation accelerators are preferable, and alkoxide of titanium metal, carboxylic acid salts of titanium metal and acetylacetonate complex salts of titanium metal are more preferable. It is preferable that the amount of the condensation accelerator is such that the ratio by mole of the amount of the above compound to the amount of the entire hydrocarbyloxy group present in the reaction system is 0.1 to 10 and more preferably 0.5 to 5. When the amount of the condensation accelerator is in the above range, the condensation reaction proceeds efficiently.

The condensation reaction in the present invention proceeds in the presence of the condensation accelerator described above and steam or water. Examples of the process in the presence of steam include the treatment for removing the solvent in accordance with the steam stripping. The condensation reaction proceeds during the steam stripping.
The condensation reaction may be conducted in an aqueous solution. It is preferable that the temperature of the condensation reaction is 85 to 180°C, more preferably 100 to 170°C and most preferably 110 to 150°C.
When the temperature of the condensation reaction is kept within the above range, the condensation reaction proceeds efficiently to complete the reaction, and decrease in the quality with passage of the time due to aging reactions of the polymer in the modified conjugate diene-based polymer thus obtained can be suppressed.

The time of the condensation reaction is, in general, 5 minutes to 10 hours and preferably about 15 minutes to 5 hours. When the time of the condensation reaction is within the above range, the condensation reaction can be completed smoothly.
The pressure of the condensation reaction is, in general, 0.01 to 20 MPa and preferably 0.05 to 10 MPa.
When the condensation reaction is conducted in an aqueous solution, the form of the reaction is not particularly limited. The reaction may be conducted by using a reactor of the batch type or conducted continuously using a continuous apparatus such as a multistage continuous reactor. The condensation reaction and the removal of the solvent may be conducted simultaneously.
The primary amino group in the modified conjugated diene-based polymer in the present invention derived from the modifier is formed by conducting the treatment for removal of protection as described above. Examples of the advantageous treatment for removal of protection other than the treatment for removal of the solvent using steam such as the steam stripping described above will be described specifically in the following.
The protective group on the primary amino group is hydrolyzed to obtain a free primary amino group. By treating the obtained product by the removal of the solvent, the modified conjugate diene-based polymer having the primary amino group can be obtained. The protected primary amino group derived from the modifier can be treated for removal of the protection in any stage from the stage comprising the treatment for condensation to the stage of drying the polymer after removal of the solvent in accordance with the necessity.

It is preferable that the Mooney viscosity (ML₁₊₄, 100°C) of the modified SBR obtained in the present invention is 10 to 150 and more preferably 15 to 100. When the Mooney viscosity is within the above range, a rubber composition exhibiting excellent workability in mixing and excellent mechanical properties after being vulcanized can be obtained.
The modified SBR in the present invention has the protonic group and/or the protected amino group and, preferably, the amine-based functional groups described above and the hydrocarbyloxysilane group in the polymer. The protonic amino group and the group obtained by dissociation of the protected amino group exhibit excellent interaction with carbon black and silica. The hydrocarbyloxysilane group exhibits excellent interaction with silica, in particular. For the SBR used as the base material, a polymer having a specific short chain of styrene in a specific relative amount is used. Due to these conditions, the rubber composition comprising said modified SBR provides a tire exhibiting excellent fracture property and abrasion properties in combination with small heat buildup and excellent steering stability.

The rubber composition used for a tread of the tire of the present invention will be described in the following.

### [Rubber composition]

The composition in the present invention is a rubber composition comprising the modified SBR of the present invention described above. It is necessary that the rubber composition described above comprises (A) a rubber component comprising the modified SBR of the present invention described above and (B) silica having a specific surface area by cetyltrimethylammonium bromide (CTAB) adsorption of 60 to 130 m²/g and a specific surface area by nitrogen adsorption (N₂SA) in accordance with the BET method of 70 to 140 m²/g in an amount of 20 to 150 parts by mass based on 100 parts by mass of the rubber component.

### ((A) Rubber component)

In the rubber composition in the present invention, the rubber component comprising 15 to 70% by mass of the modified SBR described above is used. It is preferable that the content of the modified SBR in the rubber component is 30 to 60% by mass. When the content of the modified SBR in the rubber component is in the range of 15 to 70% by mass, the rubber composition exhibiting the desired physical properties can be obtained.
The modified SBR may be used singly or in combination of two or more. Example of the other rubber component used in combination with the modified SBR include natural rubber, synthetic isoprene rubber, butadiene rubber, styrene-butadiene rubber, ethylene-α-olefin copolymer rubber, ethylene-α-olefin-diene copolymer rubber, acrylonitrile-butadiene copolymer rubber, chloroprene rubber, halogenated butyl rubber and blends of these rubbers. The rubber may have a branched structure obtained by using a polyfunctional modifier such as tin tetrachloride and silicon tetrachloride as a portion of the modifier.

### ((B) Silica)

In the rubber composition in the present invention, silica is used as the reinforcing filler of Component (B).
It is necessary that silica has a specific surface area by cetyltrimethylammonium bromide (CTAB) adsorption of 60 to 130 m²/g and a specific surface area by nitrogen adsorption (N₂SA) in accordance with the BET method of 70 to 140 m²/g. It is preferable that the specific surface area by CTAB adsorption is in the range of 80 to 130 (m²/g) and N₂SA in accordance with the BET method in the range of 80 to 130 m²/g.
The silica having CTAB and N₂SA in these ranges exhibits remarkably improved dispersion in the rubber composition when the silica is used in combination with the modified SBR constituting the rubber component of Component (A) described above. Therefore, the fracture property can be maintained, and hysteresis loss can be improved to a great extent. As the silica, wet silica which simultaneously exhibits the effect of improving the fracture property and the effect of exhibiting excellent wet grip property most remarkably is preferable. Example of the silica include "ZEOSIL 1115MP" manufactured by RHODIA Co., Ltd.
The silica may be used singly or in combination of two or more. It is necessary that the amount of silica is 20 to 150 parts by mass and preferably 20 to 10 parts by mass based on 100 parts by mass of the rubber component. When the amount of silica is within the above range, decrease in the workability of the composition in mixing is suppressed and excellent abrasion property and small hysteresis loss can be obtained.

### (Carbon black)

In the composition in the present invention, a decrease in the fracture property can be suppressed and excellent abrasion property and small hysteresis loss can be obtained by using carbon black in an amount such that the amount based on 100 parts by mass of the rubber component is 8 parts by mass or greater and the ratio of the amounts by mass of silica to carbon black (silica/carbon black) is 95/5 to 10/90. It is preferable that at least one carbon black selected from carbon blacks of the HAF grade, the ISAF grade and the SAF grade is used. From the standpoint of the reinforcing property, it is preferable that carbon black of the ISAF grade or higher is used.

### (Silane coupling agent)

In the rubber composition in the present invention, a silane coupling agent can be used for the purpose of further improving the reinforcing property and the small heat buildup since silica is used as the reinforcing filler. It is preferable that the amount of the silane coupling agent is selected in the range of 2 to 20% by mass based on the amount of silica although the amount is different depending on the type of the silane coupling agent. When the amount is less than 2% by mass, the effect of the silane coupling agent is not sufficiently exhibited. When the amount exceeds 20% by mass, there is the possibility that gelation of the rubber component takes place. From the standpoint of the effect as the coupling agent and prevention of gelation, it is most preferable that the amount of the silane coupling agent is in the range of 5 to 15% by mass.

As the preferable silane coupling agent, a silane coupling agent comprising a protected mercaptosilane represented by the following general formula (IV):

R¹⁴ₓR¹⁵_{y}R¹⁶_{z}SiR¹⁷-S-CO-R¹⁸ (IV)

is used.

In general formula (IV), R¹⁴ represents a group represented by R¹⁹O-, R¹⁹C(=O)O-, R¹⁹R²⁰C=NO- , R¹⁹R²⁰N- or -(OSiR¹⁹R²⁰)ₘ(OSiR¹⁸R¹⁹R²⁰), R¹⁹ and R²⁰ each independently representing hydrogen atom or a monovalent hydrocarbon group having 1 to 18 carbon atoms; R¹⁵ represents a group represented by R¹⁴, hydrogen atom or a monovalent hydrocarbon group having 1 to 18 carbon atoms; R¹⁶ represents a group represented by R¹⁴ or R¹⁵ or a group represented by -[O(R²¹O)ₐ]_{0.5}-, R²¹ representing an alkylene group having 1 to 18 carbon atoms, and a representing an integer of 1 to 4; R¹⁷ represents a divalent hydrocarbon group having 1 to 18 carbon atoms; R¹⁸ represents a monovalent hydrocarbon group having 1 to 18 carbon atoms; and **x**, **y** and **z** represent numbers satisfying relations of **x**+**y**+2**z**=3, 0≦**x**≦3, 0≦**y**≦2 and 0≦**z**≦ 1.

Examples of the monovalent hydrocarbon group having 1 to 18 carbon atoms in the above general formula (IV) include alkyl groups having 1 to 18 carbon atoms, alkenyl groups having 2 to 18 carbon atoms, aryl groups having 6 to 18 carbon atoms and aralkyl groups having 7 to 18 carbon atoms. The alkyl group and the alkenyl group may by any of linear groups and branched groups. The aryl group and the aralkyl group may have substituents such as lower alkyl groups on the aromatic ring.

Examples of the monovalent hydrocarbon having 1 to 18 carbon atoms include methyl group, ethyl group, n-propyl group, isopropyl group, n-butyl group, isobutyl group, sec-butyl group, tert-butyl group, pentyl group, hexyl group, octyl group, decyl group, dodecyl group, cyclopentyl group, cyclohexyl group, vinyl group, propenyl group, allyl group, hexenyl group, octenyl group, cyclopentenyl group, cyclohexenyl group, phenyl group, tolyl group, xylyl group, naphthyl group, benzyl group, phenetyl group and naphthylmethyl group.
The alkylene group having 1 to 18 carbon atoms which is represented by R²¹ in general formula (IV) may be any of a linear group, a branched group and a cyclic group. Linear groups are preferable. Examples of the linear alkyl group include methylene group, ethylene group, trimethylene group, tetramethylene group, pentamethylene group, hexamethylene group, octamethylene group, decamethylene group and dodecamethylene group.
Examples of the divalent hydrocarbon group having 1 to 18 carbon atoms which is represented by R¹⁷ include alkylene groups having 1 to 18 carbon atoms, alkenylene groups having 2 to 18 carbon atoms, cycloalkylene groups having 5 to 18 carbon atoms, cycloalkylalkylene groups having 6 to 18 carbon atoms, arylene groups having 6 to 18 carbon atoms and aralkylene groups having 7 to 18 carbon atoms. The alkylene group and the alkenylene group may be any of linear groups and branched groups. The cycloalkylene group, the cycloalkylalkylene group, the arylene group and the aralkylene group may have substituents such as lower alkyl groups on the ring.
As the group represented by R¹⁷, alkylene groups having 1 to 6 carbon atoms are preferable, and linear alkylene groups such as methylene group, ethylene group, trimethylene group, tetramethylene group, pentamethylene group and hexamethylene group are more preferable.
Examples of the silane coupling agent represented by general formula (IV) include 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane and 2-lauroylthioethyltrimethoxysilane.

Due to the use of the silane coupling agent described above, the rubber composition in the present invention exhibits excellent workability in mixing of the rubber composition since the time before scorching is increased due to the decrease in the viscosity of the unvulcanized rubber and mixing for a longer time is made possible, and the hysteresis loss can be decreased since dispersion of silica in the rubber component is improved and reactivity between silica and the polymer is improved. By utilizing the advantages obtained by the improvements, the amount of the reinforcing filler can be increased and, as the result, a tire exhibiting excellent abrasion resistance can be obtained.
In the present invention, the silane coupling agent may be used singly or in combination of two or more. The amount is selected, in general, in the range of 2 to 20% by mass based on the amount of the silica of Component (B). When the amount of the silane coupling agent is within the above range, the effect of the present invention can be sufficiently exhibited. It is preferable that the amount is in the range of 5 to 15% by mass.
It is preferable that, for coupling of the silane coupling agent with the polymer, a proton donor, typical examples of which include DPG (diphenylguanidine), is added as the agent for removing protection in the final stage of mixing so that coupling of the silane coupling agent and the polymer is achieved. It is preferable that the amount of the proton donor is in the range of 0.1 to 5.0 parts by mass and more preferably in the range of 0.2 to 3.0 parts by mass based on 100 parts by mass of the rubber component.

When the silane compound having sulfur having a specific structure in which the compound has an organoxysilyl group at both chain ends of the molecule and a sulfide or polysulfide structure in the middle portion of the molecule as described in the pamphlet of WO 2004/000930 disclosed by the present applicant is used as the silane coupling agent, the rubber composition exhibits small viscosity in the unvulcanized condition and excellent dispersion of silica, and a tire obtained by using the rubber composition as the tread material exhibits excellent abrasion resistance, small rolling resistance and improved braking and steering stability on wet road surfaces.

Conventionally used silane coupling agents can also be used.
Examples of the silane coupling agent include bis(3-triethoxysilylpropyl) tetrasulfide, bis(3-triethoxysilylpropyl) trisulfide, bis(3-triethoxysilylpropyl) disulfide, bis(3-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzolyl tetrasulfide, 3-triethoxysilylpropyl methacrylate monosulfide, 3-trimethoxysilylpropyl methacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide and dimethoxymethylsilylpropylbenzothiazolyl tetrasulfide. From the standpoint of the effect of improving the reinforcing property, bis(3-triethoxysilylpropyl) polysulfides and 3-trimethoxysilylpropylbenzothiazyl tetrasulfide are preferable.
The silane coupling agent may be used singly or in combination of two or more.

### (Preparation of the rubber composition)

The rubber composition in the present invention may comprise various chemicals conventionally used in the rubber industry such as vulcanizing agents, vulcanization accelerators, process oils, antioxidants, antiscorching agents, zinc oxide and stearic acid as long as the object of the present invention is not adversely affected.
Examples of the vulcanizing agent include sulfur. It is preferable that the amount of sulfur is 0.1 to 10.0 parts by mass and more preferably 1.0 to 5.0 parts by mass based on 100 parts by mass of the rubber component of Component (A). When the amount is smaller than 0.1 part by mass, there is the possibility that the fracture strength, the abrasion resistance and the small heat buildup become poor. An amount exceeding 10.0 parts by mass causes a loss in the rubber elasticity.

The vulcanization accelerator which can be used in the present invention is not particularly limited. Examples of the vulcanization accelerator include thiazole-based vulcanization accelerators such as M (2-mercaptobenzothiazole), DM (dibenzothiazyl disulfide) and CZ (N-cyclohxyl-2-benzothiazylsulfenamide) and guanidine-based vulcanization accelerators such as DPG (diphenylguanidine). It is preferable that the amount of the vulcanization accelerator is 0.1 to 5.0 parts by mass and more preferably 0.2 to 3.0 parts by mass based on 100 parts by mass of the rubber component of Component (A).

Examples of the process oil which can be used in the rubber composition in the present invention include paraffinic oils, naphthenic oils and aromatic oils. Aromatic oils are used in the applications in which the tensile strength and the abrasion resistance are important. Naphthenic oils or paraffinic oils are used in the applications in which the properties at low temperatures are important. It is preferable that the amount of the process oil is 0 to 100 parts by mass based on 100 parts by mass of the rubber composition of Component (A). When the amount exceeds 100 parts by mass, the tensile strength and the property of exhibiting small heat buildup tends to become poor.

The rubber composition in the present invention can be obtained by mixing the components using a mixer such as rolls and an internal mixer. The obtained rubber composition is then treated in the forming stage, vulcanized and used as the tire tread. The rubber composition may be used in other tire applications such as under-treads, side walls, carcass coating rubbers, belt coating rubbers, bead fillers, chafers and bead insulation rubbers and in industrial products such as vibration isolation rubbers, belts and hoses.

### [Tire]

The tire of the present invention is produced by using the rubber composition described above in accordance with a conventional process. The rubber composition described in the present invention comprising various chemicals as described above is processed to form a tread in the unvulcanized condition and formed by lamination on a tire former in accordance with a conventional process, and a green tire is obtained. The obtained green tire is pressed under a pressure in a vulcanizing machine, and a tire can be obtained.
The tire of the present invention exhibits excellent property for exhibiting small fuel consumption in combination with excellent fracture property, abrasion property and steering stability. Moreover, the productivity is excellent since workability of the rubber composition is excellent.

### EXAMPLES

The present invention will be described more specifically with reference to examples in the following. However, the present invention is not limited to the examples.
Physical properties of a polymer were measured in accordance with the following methods.
Properties were measured in accordance with the following methods.

### «Physical properties of SBR before and after modification»

### <Analysis method of microstructure>

The content (%) of the vinyl bond was measured in accordance with the infrared method (the Morero's method).

### <Measurement of number-average molecular weight (Mn), weight-average molecular weight (Mw) and molecular weight distribution (Mw/Mn)>

Mn, Mw and Mw/Mn were measured using GPC (HLC-8020, manufacture by TOSOH Corporation) and a refractometer as the detector and expressed as the corresponding values of the monodisperse polystyrene used as the reference material. GMHXL (manufactured by TOSOH Corporation) was used as the column, and tetrahydrofuran was used as the solvent.

### <Measurement of Mooney viscosity (ML₁₊₄, 100°C)>

The Mooney viscosity was obtained in accordance with the method of Japanese Industrial Standard K 6300 using an L rotor under the condition of preheating for 1 minute, driving the rotor for 4 minutes and at a temperature of 100°C.

### <<Evaluation of properties of tire; tire size: 195/65R15>>

### (1) Rolling resistance

The rolling resistance was measured in accordance with the free running method when a tire was driven at a speed of 80 km under a load of 4500 N (460 kg) using a rotating drum having a flat and smooth steel surface, an outer diameter of 1707.6 mm and a width of 350 mm.

The result of the measurement was expressed as an index based on the value in Comparative Example 1 used as the reference, which was set at 100. The greater the value obtained as the result, the smaller the rolling resistance (the smaller the fuel consumption). The results of the evaluation are shown in Table 1.

### (2) Abrasion resistance

After a tire was attached to a vehicle and driven for 10,000 km on a paved road, the depth of the remaining groove was measured. The driving distance required for abrasion of the tread by 1 mm was compared. The values in Table 1 are shown as indices based on the value in Comparative Example 1 used as the reference (corresponding to 8,000 km/mm), which was set at 100. The greater the index, the more excellent the abrasion resistance. The results of the evaluation are shown in Table 1.

### (3) Wet skid resistance

The braking distance was measured on a wet road surface of asphalt at initial speeds of 40, 60 and 80 km/hr. Using the tire of Comparative Example 1 as the control tire and setting the result of the control tire at 100 at each speed, an index was obtained in accordance with the calculation: the braking distance in Comparative Example 1 / the braking distance of a test tire x 100. The average value of the obtained values at the three initial speeds was shown as an index. The greater the index, the more excellent the wet skid resistance. The results are shown in Table 1.

### «Physical properties of vulcanized rubber»

### (1) Fracture property

Using a sheet of a vulcanized rubber, tensile strength at break (TSb) was measured in accordance with the method of Japanese Industrial Standard K 6251-2004 at the room temperature (25°C). The fracture property was expressed as an index based on the value in Comparative Example 1, which was set at 100. The greater the index, the more excellent the fracture property.

### Preparation Example 1 Styrene-butadiene rubber modified with primary amino group

### <Synthesis of modifier>

### Synthesis Example 1: Synthesis of N,N-bis(trimethylsilyl)aminopropylmethyldiethoxysilane

Under the atmosphere of nitrogen, 36 g of 3-aminopropylmethyldiethoxysilane (manufactured by GELEST Company) as the aminosilane portion was added into 400 ml of dichloromethane solvent placed in a glass flask equipped with a stirrer. Then, 48 ml of trimethylsilane chloride (manufactured by ALDRICH Company) as the protecting portion and 53 ml of triethylamine was added into the solution, and the resultant solution was stirred for 17 hours at the room temperature. The solvent was removed by treating the reaction solution by an evaporator, and a reaction mixture was obtained. The reaction mixture was distilled under a reduced pressure under the condition of 665 Pa, and 40 g of N,N-bis(trimethylsilyl)aminopropylmethyldiethoxysilane was obtained as the fraction of 130 to 135°C.

### Synthesis Example 2: Synthesis of N,N-bis(trimethylsilyl)aminopropyltriethoxysilane

In accordance with the same procedures as those conducted in Synthesis Example 1 except that 3-aminopropyltriethoxysilane was used as the aminosilane portion in place of 3-aminopropylmethyldiethoxysilane, about 40 g of N,N-bis(trimethylsilyl)aminopropyltriethoxysilane was obtained.

### <Synthesis of styrene-butadiene rubber modified with primary amine>

### Preparation Example 1: Preparation of Modified styrene-butadiene rubber (A)

Into an autoclave reactor having an inner volume of 5 liters which had been purged with nitrogen, 2,750 g of cyclohexane, 41.3 g of tetrahydrofuran, 125 g of styrene and 375 g of 1,3-butadiene were placed. After the temperature of the content of the reactor was adjusted at 10°C, polymerization was initiated by adding 215 mg of n-butyllithium. The polymerization was conducted under the adiabatic condition, and the maximum temperature reached 85°C.
When the conversion reached 99%, 10 g of butadiene was further added, and the polymerization was conducted for further 5 minutes. After a small amount of a sample was taken from the polymer solution in the reactor into 30 g of a cyclohexane solution containing 1 g of methanol, 1,129 mg of N,N-bis(trimethylsilyl)aminopropylmethyldiethoxysilane obtained in Synthesis Example 1 was added, and the reaction of modification was conducted for 15 minutes. Thereafter, 8.11 g of tetrakis(2-ethyl-1,3-hexanediolato)titanium as the condensation accelerator was added, and the reaction of condensation was conducted for further 15 minutes under stirring. As the final step, 2,6-di-tert-butyl-p-cresol was added to the polymer solution obtained after the reaction. Then, the removal of the solvent and the removal of protection from the protected primary amino group were conducted by steam stripping. The resultant rubber was dried by heated rolls adjusted at a temperature of 110°C, and Modified styrene-butadiene rubber (A) modified with a primary amine was obtained. The obtained Modified styrene-butadiene rubber (A) modified with a primary amine had a content of the bound styrene of 25% by mass, a content of vinyl bond in the conjugated diene portion of 56% and a Mooney viscosity of 32.

### Preparation Example 2: Preparation of Modified styrene-butadiene rubber (B)

Modified styrene-butadiene rubber (B) modified with a primary amine was obtained in accordance with the same procedures as those conducted in Preparation Example 1 except that N,N-bis(trimethylsilyl)-aminopropyltriethoxysilane obtained in Synthesis Example 2 was used as the modifier in place of N,N-bis(trimethylsilyl)aminopropylmethyldiethoxysilane.
The obtained Modified styrene-butadiene rubber (B) modified with a primary amine had a content of the bound styrene of 25% by mass, a content of vinyl bond in the conjugated diene portion of 56% and a Mooney viscosity of 38.

### Examples 1 to 10 and Comparative Examples 1 to 9

Nineteen rubber compositions having the compositions shown in Table 1 were prepared, and the physical properties of each rubber composition, i.e., the rolling resistance, the abrasion resistance, the fracture property and the wet skid resistance, were evaluated. The results of the evaluation are shown in Table 1.

**Table 1 - 1**

| Example | | | | | | | | | | | |
|---|---|---|---|---|---|---|---|---|---|---|---|
| Comparative Example | | | 1 | 2 | 3 | 4 | 5 | 6 | 7 | 8 | 9 |
| Silica | CTAB | BET | | | | | | | | | |
| SBR 1712 *¹ | - | - | 82.5 | 82.5 | 68.8 | 82.5 | 82.5 | 82.5 | 82.5 | 82.5 | 82.5 |
| SBR 1500 *² | - | - | - | - | - | - | 30 | - | - | - | - |
| BR01 *³ | - | - | - | - | - | - | - | - | - | - | - |
| Unmodined SBR by solution polymerization *⁴ | - | - | 40 | 40 | 50 | 40 | - | - | - | - | - |
| Modified SBR by solution polymerization *⁵ | - | - | - | - | - | - | 10 | 40 | 40 | 40 | 40 |
| Modified SBR by solution polymerization *⁶ | - | - | - | - | - | - | - | - | - | - | - |
| Carbon black *⁷ | - | - | 10 | 10 | 10 | 10 | 10 | 70 | 10 | 10 | 10 |
| Silica*⁸ | 158 | 217 | 70 | 80 | 70 | - | 70 | - | - | - | - |
| Silica having great particle diameter *⁹ | 112 | 112 | - | - | - | 70 | - | 10 | 160 | - | - |
| Silica having great particle diameter *¹⁰ | 30 | 35 | - | - | - | - | - | - | - | 70 | - |
| Silica having great particle diameter *¹¹ | 45 | 50 | - | - | - | - | - | - | - | - | 70 |
| Silane coupling agent (Si69) *¹² | - | - | 7 | 8 | 7 | 7 | 7 | 1 | 16 | 7 | 7 |
| Silane coupling agent (NXT) *¹³ | - | - | - | - | - | - | - | - | - | - | - |
| Stearic acid | - | - | 1 | 1 | 1 | 1 | 1 | 1 | 1 | 1 | 1 |
| Antioxidant (6PPD) *¹⁴ | - | - | 1.5 | 1.5 | 1.5 | 1.5 | 1.5 | 1.5 | 1.5 | 1.5 | 1.5 |
| Wax | - | - | 1.5 | 1.5 | 1.5 | 1.5 | 1.5 | 1.5 | 1.5 | 1.5 | 1.5 |
| Zinc oxide | - | - | 2.5 | 2.5 | 2.5 | 2.5 | 2.5 | 2.5 | 2.5 | 2.5 | 2.5 |
| Vulcanization accelerator (DPG) *¹⁵ | - | - | 0.5 | 0.5 | 0.5 | 0.5 | 0.5 | 0.5 | 0.5 | 0.5 | 0.5 |
| Vulcanization accelerator (CZ) *¹⁶ | - | - | 0.7 | 0.7 | 0.7 | 0.7 | 0.7 | 0.7 | 0.7 | 0.7 | 0.7 |
| Vulcanization accelerator (NS) *¹⁷ | - | - | 0.8 | 0.8 | 0.8 | 0.8 | 0.8 | 0.8 | 0.8 | 0.8 | 0.8 |
| Sulfur | - | - | 1.6 | 1.6 | 1.6 | 1.6 | 1.6 | 1.6 | 1.6 | 1.6 | 1.6 |
| Rolling resistance | - | - | 100 | 95 | 102 | 104 | 95 | 94 | 95 | 110 | 108 |
| Abrasion resistance | - | - | 100 | 102 | 93 | 97 | 105 | 101 | 103 | 88 | 93 |
| Facture property | - | - | 100 | 102 | 93 | 98 | 103 | 102 | 104 | 90 | 91 |
| Wet skid resistance | - | - | 100 | 105 | 100 | 100 | 101 | 97 | 103 | 96 | 97 |

**Table 1 - 2**

| Example | 1 | 2 | 3 | 4 | 5 | 6 | 7 | 8 | 9 | 10 |
|---|---|---|---|---|---|---|---|---|---|---|
| Comparative Example | | | | | | | | | | |
| Silica | | | | | | | | | | |
| SBR 1712 *¹ | 82.5 | 82.5 | 68.8 | 82.5 | 68.8 | 68.8 | 68.8 | 82.5 | 82.5 | 82.5 |
| SBR 1500 *² | - | - | - | - | - | - | - | - | - | - |
| BR01 *³ | - | - | - | - | - | 10 | 10 | - | - | - |
| Unmodified SBR by solution polymerization *⁴ | - | - | - | - | - | - | - | - | - | - |
| Modified SBR by solution polymerization *⁵ | 40 | - | 50 | 40 | 50 | 40 | - | 40 | 40 | 40 |
| Modified SBR by solution polymerization *⁶ | - | 40 | - | - | - | - | 40 | - | - | - |
| Carbon black *⁷ | 10 | 10 | 10 | 10 | 10 | 10 | 10 | 30 | 10 | 10 |
| Silica *⁸ | - | - | - | - | - | - | - | - | - | - |
| Silica having great particle diameter *⁹ | 70 | 70 | 70 | 80 | 80 | 80 | 80 | 30 | 90 | 120 |
| Silica having great particle diameter *¹⁰ | - | - | - | - | - | - | - | - | - | - |
| Silica having great particle diameter *¹¹ | - | - | - | - | - | - | - | - | - | - |
| Silane coupling agent (Si69) *¹² | 7 | 7 | 7 | 8 | - | - | - | 3 | 9 | 12 |
| Silane coupling agent (NXT) *¹³ | - | - | - | - | 10 | 10 | 10 | - | - | - |
| Stearic acid | 1 | 1 | 1 | 1 | 1 | 1 | 1 | 1 | 1 | 1 |
| Antioxidant (6PPD) *¹⁴ | 1.5 | 1.5 | 1.5 | 1.5 | 1.5 | 1.5 | 1.5 | 1.5 | 1.5 | 1.5 |
| Wax | 1.5 | 1.5 | 1.5 | 1.5 | 1.5 | 1.5 | 1.5 | 1.5 | 1.5 | 1.5 |
| Zinc oxide | 2.5 | 2.5 | 2.5 | 2.5 | 2.5 | 2.5 | 2.5 | 2.5 | 2.5 | 2.5 |
| Vulcanization accelerator (DPG) *¹⁵ | 0.5 | 0.5 | 0.5 | 0.5 | 0.5 | 0.5 | 0.5 | 0.5 | 0.5 | 0.5 |
| Vulcanization accelerator (CZ) *¹⁶ | 0.7 | 0.7 | 0.7 | 0.7 | 0.7 | 0.7 | 0.7 | 0.7 | 0.7 | 0.7 |
| Vulcanization accelerator (NS) *¹⁷ | 0.8 | 0.8 | 0.8 | 0.8 | 0.8 | 0.8 | 0.8 | 0.8 | 0.8 | 0.8 |
| Sulfur | 1.6 | 1.6 | 1.6 | 1.6 | 1.6 | 1.6 | 1.6 | 1.6 | 1.6 | 1.6 |
| Rolling resistance | 107 | 105 | 110 | 104 | 109 | 114 | 112 | 107 | 102 | 100 |
| Abrasion resistance | 101 | 101 | 100 | 103 | 104 | 110 | 109 | 100 | 105 | 106 |
| Facture property | 102 | 101 | 100 | 104 | 102 | 101 | 100 | 101 | 105 | 106 |
| Wet skid resistance | 100 | 100 | 100 | 103 | 103 | 100 | 100 | 100 | 103 | 104 |

| | | | | | | | | | | |
|---|---|---|---|---|---|---|---|---|---|---|
| Notes *1: SBR #1712; manufactured by JSR Corporation, Ltd.; an oil extended SBR extended with 37.5 parts by mass of an extending oil; the amounts shown in Table 1 being amounts including the extending oil *2: SBR #1500; manufactured by JSR Corporation, Ltd. *3: BR01; polybutadiene rubber; manufactured by JSR Corporation, Ltd. *4: Styrene-butadiene rubber before modification; the rubber used in Preparation Example 1 before the modification *5: Modified styrene-butadiene rubber; Modified styrene-butadiene rubber (A) of Preparation Example 1 *6: Modified styrene-butadiene rubber; Modified styrene-butadiene rubber (B) of Preparation Example 2 *7: Carbon black: N234; manufactured by TOKAI CARBON Co., Ltd.; "SIEST HM" *8: Silica: manufactured by TOSOH SILICA Corporation; "NIPSIL AQ"; CTAB: 158 m²/g; BET: 217 m²g *9: Silica having a great particle diameter; manufactured by RHODIA Company; "ZEOSIL 1115MP"; CTAB: 112 m²/g; BET: 112 m²g *10: Silica having a great particle diameter; manufactured by DEGUSSA Company; "ULTRASIL 880"; CTAB: 30 m²/g; BET: 35 m²g *11: Silica having a great particle diameter; manufactured by DEGUSSA Company; "ULTRASIL 360"; CTAB: 45 m²/g; BET: 50 m²g *12: Silane coupling agent; manufactured by DEGUSSA Company; "Si69" 13: Silane coupling agent (NXT); manufactured by GENERAL ELECTRIC Company; the trade name: "NXT SILANE" *14: Antioxidant 6PPD; manufactured by OUCHI SHINKO CHEMICAL INDUSTRIAL Co., Ltd.; "NOCCELOR 6C" *15: Antioxidant DPG; manufactured by OUCHI SHINKO CHEMICAL INDUSTRIAL Co., Ltd.; "NOCCELOR D" . *16: Vulcanization accelerator CZ; manufactured by OUCHI SHINKO CHEMICAL INDUSTRIAL Co., Ltd.; "NOCCELOR CZ" *17: Vulcanization accelerator DM; manufactured by OUCHI SHINKO CHEMICAL INDUSTRIAL Co., Ltd.; "NOCCELOR NS" | | | | | | | | | | |

### INDUSTRIAL APPLICABILITY

The tire of the present invention can be obtained by using, for the tread, a rubber composition which comprises a styrene-butadiene copolymer and a specific silica and can provide a tire exhibiting excellent abrasion resistance in combination with decreased rolling resistance (small heat buildup) and excellent steering stability which is typically expressed by the wet skid resistance.

## Claims

1. A tire having a tread which contains a rubber composition for a tread, the rubber composition comprising (A) a rubber component comprising 15 to 70% by mass of a styrene-butadiene copolymer modified with an amine-based functional group and (B) silica having a specific surface area by cetyltrimethylammonium bromide (CTAB) adsorption of 60 to 130 m²/g and a specific surface ara by nitrogen adsorption (N₂SA) in accordance with the BET method of 70 to 140 m²/g in an amount of 20 to 150 parts by mass based on 100 parts by mass of the rubber component.

2. A tire having a tread which contains a rubber composition for a tread according to Claim 1, wherein a content of entire styrene units in the styrene-butadiene copolymer modified with an amine-based functional group is 20 to 40% by mass.

3. A tire having a tread which contains a rubber composition for a tread according to any one of Claims 1 and 2, wherein the styrene-butadiene copolymer modified with an amine-based functional group has a protonic amino group and/or a protected amino group as the amine-based functional group.

4. A tire having a tread which contains a rubber composition for a tread according to Claim 3, wherein the styrene-butadiene copolymer modified with an amine-based functional group further has a hydrocarbyloxysilane group.

5. A tire having a tread which contains a rubber composition for a tread according to Claim 4, wherein the styrene-butadiene copolymer modified with an amine-based functional group has a protonic amino group and/or a protected amino group and a hydrocarbyloxysilane group at the ends of polymer.

6. A tire having a tread which contains a rubber composition for a tread according to Claim 5, wherein the styrene-butadiene copolymer modified with an amine-based functional group has a protonic amino group and/or a protected amino group and a hydrocarbyloxysilane group at a same end of polymer.

7. A tire having a tread which contains a rubber composition for a tread according to any one of Claims 3 to 6, wherein the protonic amino group and/or the protected amino group is at least one group selected from -NH₂, -NHR^{a}, -NL¹L² and -NR^{b}L³, wherein R^{a} and R^{b} each represent a hydrocarbon group, and L¹, L² and L³ each represent hydrogen atom or a protective group.

8. A tire having a tread which contains a rubber composition for a tread according to any one of Claims 1 to 7, wherein a content of vinyl bond in a butadiene portion in the styrene-butadiene copolymer modified with an amine-based functional group is 18 to 35%.

9. A tire having a tread which contains a rubber composition for a tread according to any one of Claims 3 to 8, wherein the styrene-butadiene copolymer modified with an amine-based functional group is obtained by reacting active ends of a styrene-butadiene copolymer with a compound having a protected amino group and a hydrocarbyloxysilane group in a molecule to modify the copolymer.

10. A tire having a tread which contains a rubber composition for a tread according to Claim 9, wherein the compound having a protected amino group and a hydrocarbyloxysilane group in a molecule is a difunctional silicon compound having a protected primary amino group.

11. A tire having a tread which contains a rubber composition for a tread according to Claim 10, wherein the compound having a difunctional silicon atom is at least one compound selected from silicon compounds represented by general formula (I): 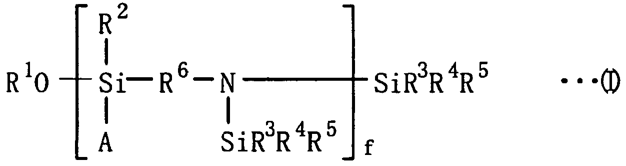 wherein R¹ and R² each independently represent a hydrocarbon group having 1 to 20 carbon atoms, R³ to R⁵ each independently represent a hydrocarbon group having 1 to 20 carbon atoms, R⁶ represents a divalent hydrocarbon group having 1 to 12 carbon atoms, A represents a halogen atom or a hydrocarbyloxy group having 1 to 20 carbon atoms, and f represents an integer of 1 to 10;
silicon compounds represented by general formula (II): 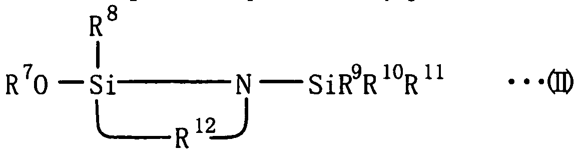 wherein R⁷ to R¹¹ each independently represent a hydrocarbon group having 1 to 20 carbon atoms, and R¹² represents a divalent hydrocarbon group having 1 to 12 carbon atoms; and
silicon compounds represented by general formula (III): 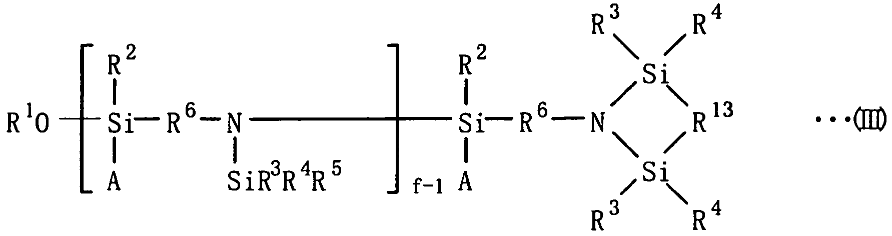 wherein R¹ and R² each independently represent a hydrocarbon group having 1 to 20 carbon atoms, R³ to R⁵ each independently represent a hydrocarbon group having 1 to 20 carbon atoms, R⁶ represents a divalent hydrocarbon group having 1 to 12 carbon atoms, R¹³ represents a divalent hydrocarbon group having 1 to 12 carbon atoms; A represents a halogen atom or a hydrocarbyloxy group having 1 to 20 carbon atoms, and f represents an integer of 1 to 10.

12. A tire having a tread which contains a rubber composition for a tread according to any one of Claims 9 to 11, wherein the styrene-butadiene copolymer modified with an amine-based functional group is obtained by reacting active ends of a styrene-butadiene copolymer with a compound having a protected amino group and a hydrocarbyloxysilane group in a molecule to modify the copolymer, followed by conducting condensation reaction involving said compound in a presence of a titanium-based condensation accelerator comprising a titanium compound.

13. A tire having a tread which contains a rubber composition for a tread according to Claim 12, wherein the titanium-based condensation accelerator is at least one compound selected from alkoxides, carboxylic acid salts and acetylacetonate complex salts of titanium.

14. A tire having a tread which contains a rubber composition for a tread according to any one of Claims 1 to 13, wherein the rubber composition comprises (C) a silane coupling agent in an amount of 2 to 20% by mass based on an amount of silica of Component (B).

15. A tire having a tread which contains a rubber composition for a tread according to Claim 14, wherein the silane coupling agent of Component (C) is represented by following general formula (IV):
R¹⁴ₓR¹⁵_{y}R¹⁶_{z}SiR¹⁷-S-CO-R¹⁸ (IV)
wherein R¹⁴ represents a group represented by R¹⁹O-, R¹⁹C(=O)O-, R¹⁹R²⁰C=NO-, R¹⁹R²⁰N- or -(OSiR¹⁹R²⁰)m(OSiR¹⁸R¹⁹R²⁰), R¹⁹ and R²⁰ each independently representing hydrogen atom or a monovalent hydrocarbon group having 1 to 18 carbon atoms; R¹⁵ represents a group represented by R¹⁴, hydrogen atom or a monovalent hydrocarbon group having 1 to 18 carbon atoms; R¹⁶ represents a group represented by R¹⁴ or R¹⁵ or a group represented by -[O(R²¹O)ₐ]_{0.5}-, R²¹ representing an alkylene group having 1 to 18 carbon atoms, and a representing an integer of 1 to 4; R¹⁷ represents a divalent hydrocarbon group having 1 to 18 carbon atoms; R¹⁸ represents a monovalent hydrocarbon group having 1 to 18 carbon atoms; and x, y and z represent numbers satisfying relations of x+y+2z=3, 0≦x≦3, 0≦y≦2 and 0≦z≦1.

16. A tire having a tread which contains a rubber composition for a tread according to any one of Claims 1 to 15, wherein the rubber composition further comprises (D) carbon black.

## Patentansprüche

1. Reifen, der eine Lauffläche aufweist, die eine Kautschukzusammensetzung für eine Lauffläche enthält, wobei die Kautschukzusammensetzung (A) eine Kautschukkomponente, die 15 bis 70 Masse-% eines mit einer funktionellen Gruppe auf Aminbasis modifizierten Styrol-Butadien-Copolymers umfasst, und (B) Siliciumdioxid, das einen spezifischen Oberflächenbereich durch Cetyltrimethylammoniumbromid-(CTAB) Adsorption von 60 bis 130 m²/g und einen spezifischen Oberflächenbereich durch Stickstoffadsorption (N₂SA) der BET-Methode gemäß von 70 bis 140 m²/g aufweist, in einer Menge von 20 bis 150 Masseteilen, auf 100 Masseteile der Kautschukkomponente bezogen, umfasst.

2. Reifen, der eine Lauffläche aufweist, die eine Kautschukzusammensetzung für eine Lauffläche nach Anspruch 1 enthält, wobei ein Gehalt ganzer Styroleinheiten in dem mit einer funktionellen Gruppe auf Aminbasis modifizierten Styrol-Butadien-Copolymer 20 bis 40 Masse-% beträgt.

3. Reifen, der eine Lauffläche aufweist, die eine Kautschukzusammensetzung für eine Lauffläche nach einem der Ansprüche 1 und 2 enthält, wobei das mit einer funktionellen Gruppe auf Aminbasis modifizierte Styrol-Butadien-Copolymer eine protonische Aminogruppe und/oder eine geschützte Aminogruppe als funktionelle Gruppe auf Aminbasis aufweist.

4. Reifen, der eine Lauffläche aufweist, die eine Kautschukzusammensetzung für eine Lauffläche nach Anspruch 3 enthält, wobei das mit einer funktionellen Gruppe auf Aminbasis modifizierten Styrol-Butadien-Copolymer des Weiteren eine Hydrocarbyloxysilangruppe aufweist.

5. Reifen, der eine Lauffläche aufweist, die eine Kautschukzusammensetzung für eine Lauffläche nach Anspruch 4 enthält, wobei das mit einer funktionellen Gruppe auf Aminbasis modifizierte Styrol-Butadien-Copolymer eine protonische Aminogruppe und/oder eine geschützte Aminogruppe und eine Hydrocarbyloxysilangruppe an den Enden des Polymers aufweist.

6. Reifen, der eine Lauffläche aufweist, die eine Kautschukzusammensetzung für eine Lauffläche nach Anspruch 5 enthält, wobei das mit einer funktionellen Gruppe auf Aminbasis modifizierte Styrol-Butadien-Copolymer eine protonische Aminogruppe und/oder eine geschützte Aminogruppe und eine Hydrocarbyloxysilangruppe an demselben Ende des Polymers aufweist.

7. Reifen, der eine Lauffläche aufweist, die eine Kautschukzusammensetzung für eine Lauffläche nach einem der Ansprüche 3 bis 6 enthält, wobei die protonische Aminogruppe und/oder die geschützte Aminogruppe mindestens eine Gruppe ist ausgewählt unter NH₂, -NHR^{a}, -NL¹L² und -NR^{b}L³, wobei R^{a} und R^{b} jeweils eine Kohlenwasserstoffgruppe darstellen und L¹, L² und L³ jeweils ein Wasserstoffatom oder eine Schutzgruppe darstellen.

8. Reifen, der eine Lauffläche aufweist, die eine Kautschukzusammensetzung für eine Lauffläche nach einem der Ansprüche 1 bis 7 enthält, wobei ein Gehalt an Vinylbindung in einem Butadienteil im mit einer funktionellen Gruppe auf Aminbasis modifizierten Styrol-Butadien-Copolymer 18 bis 35 % beträgt.

9. Reifen, der eine Lauffläche aufweist, die eine Kautschukzusammensetzung für eine Lauffläche nach einem der Ansprüche 3 bis 8 enthält, wobei das mit einer funktionellen Gruppe auf Aminbasis modifizierte Styrol-Butadien-Copolymer durch Reagieren der aktiven Enden eines Styrol-Butadien-Copolymers mit einer Verbindung, die eine geschützte Aminogruppe und eine Hydrocarbyloxysilangruppe in einem Molekül zum Modifizieren des Copolymers aufweist, erhalten wird.

10. Reifen, der eine Lauffläche aufweist, die eine Kautschukzusammensetzung für eine Lauffläche nach Anspruch 9 enthält, wobei die Verbindung, die eine geschützte Aminogruppe und eine Hydrocarbyloxysilangruppe in einem Molekül aufweist, eine difunktionelle Siliciumverbindung ist, die eine geschützte primäre Aminogruppe aufweist.

11. Reifen, der eine Lauffläche aufweist, die eine Kautschukzusammensetzung für eine Lauffläche nach Anspruch 10 enthält, wobei die Verbindung, die ein difunktionelles Siliciumatom aufweist, mindestens eine Verbindung ist ausgewählt unter Siliciumverbindungen, die durch die allgemeine Formel (I) dargestellt sind: 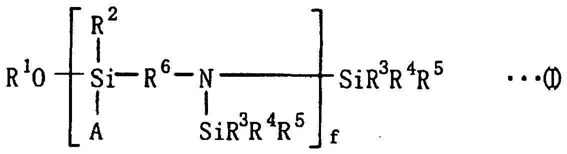 wobei R¹ und R² jeweils unabhängig eine Kohlenwasserstoffgruppe darstellen, die 1 bis 20 Kohlenstoffatome aufweist, R³ bis R⁵ jeweils unabhängig eine Kohlenwasserstoffgruppe darstellen, die 1 bis 20 Kohlenstoffatome aufweist, R⁶ eine zweiwertige Kohlenwasserstoffgruppe darstellt, die 1 bis 12 Kohlenstoffatome aufweist, A ein Halogenatom oder eine Hydrocarbyloxygruppe darstellt, die 1 bis 20 Kohlenstoffatome aufweist, und f eine ganze Zahl von 1 bis 10 darstellt;
Siliciumverbindungen, die durch die allgemeine Formel (II) dargestellt sind: 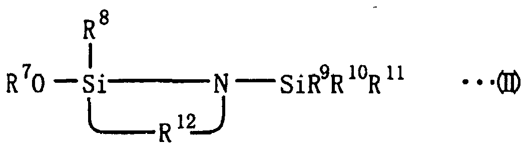 wobei R⁷ bis R¹¹ jeweils unabhängig eine Kohlenwasserstoffgruppe darstellen, die 1 bis 20 Kohlenstoffatome aufweist, und R¹² eine zweiwertige Kohlenwasserstoffgruppe darstellt, die 1 bis 12 Kohlenstoffatome aufweist; und
Siliciumverbindungen, die durch die allgemeine Formel (III) dargestellt sind: 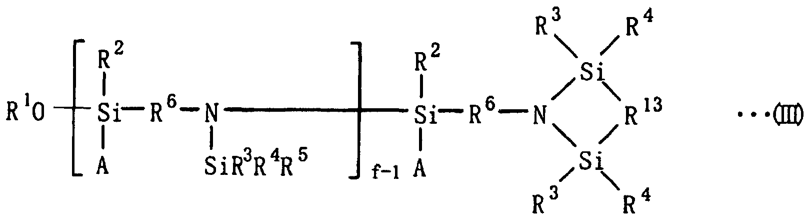 wobei R¹ und R² jeweils unabhängig eine Kohlenwasserstoffgruppe darstellen, die 1 bis 20 Kohlenstoffatome aufweist, R³ bis R⁵ jeweils unabhängig eine Kohlenwasserstoffgruppe darstellen, die 1 bis 20 Kohlenstoffatome aufweist, R⁶ eine zweiwertige Kohlenwasserstoffgruppe darstellt, die 1 bis 12 Kohlenstoffatome aufweist, R¹³ eine zweiwertige Kohlenwasserstoffgruppe darstellt, die 1 bis 12 Kohlenstoffatome aufweist, A ein Halogenatom oder eine Hydrocarbyloxygruppe darstellt, die 1 bis 20 Kohlenstoffatome aufweist, und f eine ganze Zahl von 1 bis 10 darstellt.

12. Reifen, der eine Lauffläche aufweist, die eine Kautschukzusammensetzung für eine Lauffläche nach einem der Ansprüche 9 bis 11 enthält, wobei das mit einer funktionellen Gruppe auf Aminbasis modifizierte Styrol-Butadien-Copolymer durch Reagieren der aktiven Enden eines Styrol-Butadien-Copolymers mit einer Verbindung, die eine geschützte Aminogruppe und eine Hydrocarbyloxysilangruppe in einem Molekül aufweist, zum Modifizieren des Copolymers, gefolgt vom Durchführen einer Kondensationsreaktion, die die Verbindung in Gegenwart eines Kondensationsbeschleunigers auf Titanbasis involviert, der eine Titanverbindung umfasst, erhalten wird.

13. Reifen, der eine Lauffläche aufweist, die eine Kautschukzusammensetzung für eine Lauffläche nach Anspruch 12 enthält, wobei der Kondensationsbeschleuniger auf Titanbasis mindestens eine Verbindung ist ausgewählt unter Alkoxiden, Carbonsäuresalzen und Acetylacetonat-Komplexsalzen von Titan.

14. Reifen, der eine Lauffläche aufweist, die eine Kautschukzusammensetzung für eine Lauffläche nach einem der Ansprüche 1 bis 13 enthält, wobei die Kautschukzusammensetzung (C) ein Silankopplungsmittel in einer Menge von 2 bis 20 Masse-%, auf eine Menge Siliciumdioxid der Komponente (B) bezogen, umfasst.

15. Reifen, der eine Lauffläche aufweist, die eine Kautschukzusammensetzung für eine Lauffläche nach Anspruch 14 enthält, wobei das Silankopplungsmittel der Komponente (C) durch folgende allgemeine Formel (IV) dargestellt ist:
R¹⁴ₓR¹⁵_{y}R¹⁶_{Z}SiR¹⁷-S-CO-R¹⁸ (IV)
wobei R¹⁴ eine Gruppe darstellt, die durch R¹⁹O-, R¹⁹C(=O)O-, R¹⁹R²⁰C=NO-, R¹⁹R²⁰N- oder -(OSiR¹⁹R²⁰)m(OSiR¹⁸R¹⁹R²⁰) dargestellt ist, R¹⁹ und R²⁰ jeweils unabhängig ein Wasserstoffatom oder eine einwertige Kohlenwasserstoffgruppe darstellen, die 1 bis 18 Kohlenstoffatome aufweist; R¹⁵ eine Gruppe darstellt, die die durch R¹⁴, Wasserstoffatom oder eine einwertige Kohlenwasserstoffgruppe dargestellt ist, die 1 bis 18 Kohlenstoffatome aufweist; R¹⁶ eine Gruppe darstellt, die durch R¹⁴ oder R¹⁵ oder eine Gruppe, die durch -[O(R²¹O)ₐ]_{0,5}- dargestellt ist, dargestellt ist; R²¹ eine Alkylengruppe darstellt, die 1 bis 18 Kohlenstoffatome aufweist und a eine ganze Zahl von 1 bis 4 darstellt; R¹⁷ eine zweiwertige Kohlenwasserstoffe darstellt, die 1 bis 18 Kohlenstoffatome aufweist; R¹⁸ eine einwertige Kohlenwasserstoffgruppe darstellt, die 1 bis 18 Kohlenstoffatome aufweist; und x, y und z Zahlen darstellen, die den Beziehungen x + y + 2z = 3, 0≦x≦3, 0 ≦y≦2 und 0≦z≦1 entsprechen.

16. Reifen, der eine Lauffläche aufweist, die eine Kautschukzusammensetzung für eine Lauffläche nach einem der Ansprüche 1 bis 15 enthält, wobei die Kautschukzusammensetzung des Weiteren (D) Ruß umfasst.

## Revendications

1. Pneumatique ayant une bande de roulement qui contient une composition de caoutchouc pour une bande de roulement, la composition de caoutchouc comprenant (A) un composant de caoutchouc comprenant 15 à 70 % en masse d'un copolymère de styrène-butadiène modifié avec un groupe fonctionnel à base d'amine et (B) de la silice ayant une surface spécifique par adsorption de bromure de cétyltriméthylammonium (CTAB) de 60 à 130 m²/g et une surface spécifique par adsorption d'azote (N₂SA) selon le procédé BET de 70 à 140 m²/g en une quantité de 20 à 150 parties en masse sur la base de 100 parties en masse du composant de caoutchouc.

2. Pneumatique ayant une bande de roulement qui contient une composition de caoutchouc pour une bande de roulement selon la revendication 1, dans lequel une teneur des motifs styrène entiers dans le copolymère de styrène-butadiène modifié avec un groupe fonctionnel à base d'amine est de 20 à 40 % en masse.

3. Pneumatique ayant une bande de roulement qui contient une composition de caoutchouc pour une bande de roulement selon l'une quelconque des revendications 1 et 2, dans lequel le copolymère de styrène-butadiène modifié avec un groupe fonctionnel à base d'amine a un groupe amino protonique et/ou un groupe amino protégé comme groupe fonctionnel à base d'amine.

4. Pneumatique ayant une bande de roulement qui contient une composition de caoutchouc pour une bande de roulement selon la revendication 3, dans lequel le copolymère de styrène-butadiène modifié avec un groupe fonctionnel à base d'amine possède en outre un groupe hydrocarbyloxysilane.

5. Pneumatique ayant une bande de roulement qui contient une composition de caoutchouc pour une bande de roulement selon la revendication 4, dans lequel le copolymère de styrène-butadiène modifié avec un groupe fonctionnel à base d'amine a un groupe amino protonique et/ou un groupe amino protégé et un groupe hydrocarbyloxysilane aux extrémités du polymère.

6. Pneumatique ayant une bande de roulement qui contient une composition de caoutchouc pour une bande de roulement selon la revendication 5, dans lequel le copolymère de styrène-butadiène modifié avec un groupe fonctionnel à base d'amine a un groupe amino protonique et/ou un groupe amino protégé et un groupe hydrocarbyloxysilane à une même extrémité du polymère.

7. Pneumatique ayant une bande de roulement qui contient une composition de caoutchouc pour une bande de roulement selon l'une quelconque des revendications 3 à 6, dans lequel le groupe amino protonique et/ou le groupe amino protégé est au moins un groupe sélectionné parmi -NH₂, -NHR^{a}, -NL¹L² et -NR^{b}L³, dans lequel R^{a} et R^{b} représentent chacun un groupe hydrocarbure et L¹, L² et L³ représentent chacun un atome d'hydrogène ou un groupe protecteur.

8. Pneumatique ayant une bande de roulement qui contient une composition de caoutchouc pour une bande de roulement selon l'une quelconque des revendications 1 à 7, dans lequel une teneur en liaison vinylique dans une partie butadiène dans le copolymère de styrène-butadiène modifié avec un groupe fonctionnel à base d'amine est de 18 à 35 %.

9. Pneumatique ayant une bande de roulement qui contient une composition de caoutchouc pour une bande de roulement selon l'une quelconque des revendications 3 à 8, dans lequel le copolymère de styrène-butadiène modifié avec un groupe fonctionnel à base d'amine est obtenu par la réaction des extrémités actives d'un copolymère de styrène-butadiène avec un composé ayant un groupe amino protégé et un groupe hydrocarbyloxysilane dans une molécule pour modifier le copolymère.

10. Pneumatique ayant une bande de roulement qui contient une composition de caoutchouc pour une bande de roulement selon la revendication 9, dans lequel le composé ayant un groupe amino protégé et un groupe hydrocarbyloxysilane dans une molécule est un composé de silicium difonctionnel ayant un groupe amino primaire protégé.

11. Pneumatique ayant une bande de roulement qui contient une composition de caoutchouc pour une bande de roulement selon la revendication 10, dans lequel le composé ayant un atome de silicium difonctionnel est au moins un composé sélectionné parmi les composés de silicium représentés par la formule générale (I): 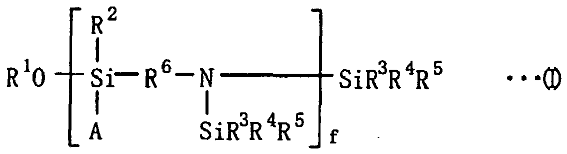 dans laquelle R¹ et R² représentent chacun indépendamment un groupe hydrocarbure ayant 1 à 20 atome(s) de carbone, R³ à R⁵ représentent chacun indépendamment un groupe hydrocarbure ayant 1 à 20 atome(s) de carbone, R⁶ représente un groupe hydrocarbure divalent ayant 1 à 12 atome(s) de carbone, A représente un atome d'halogène ou un groupe hydrocarbyloxy ayant 1 à 20 atome(s) de carbone, et f représente un nombre entier d'une valeur de 1 à 10;
les composés de silicium représentés par la formule générale (II): 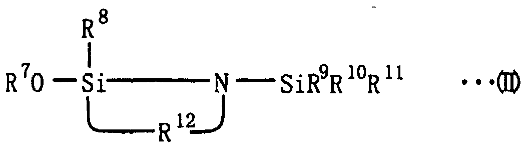 dans laquelle R⁷ à R¹¹ représentent chacun indépendamment un groupe hydrocarbure ayant 1 à 20 atome(s) de carbone, et R¹² représente un groupe hydrocarbure divalent ayant 1 à 12 atome(s) de carbone; et
les composés de silicium représentés par la formule générale (III): 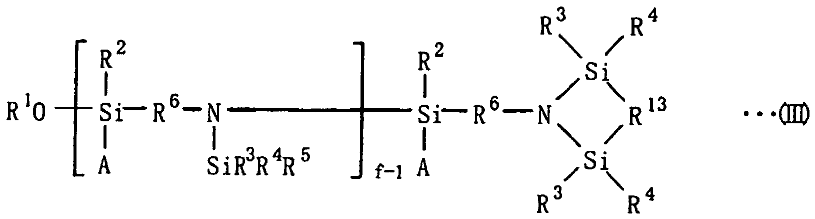 dans laquelle R¹ et R² représentent chacun indépendamment un groupe hydrocarbure ayant 1 à 20 atome(s) de carbone, R³ à R⁵ représentent chacun indépendamment un groupe hydrocarbure ayant 1 à 20 atome(s) de carbone, R⁶ représente un groupe hydrocarbure divalent ayant 1 à 12 atome(s) de carbone, R¹³ représente un groupe hydrocarbure divalent ayant 1 à 12 atome(s) de carbone; A représente un atome d'halogène ou un groupe hydrocarbyloxy ayant 1 à 20 atome(s) de carbone, et f représente un nombre entier d'une valeur de 1 à 10.

12. Pneumatique ayant une bande de roulement qui contient une composition de caoutchouc pour une bande de roulement selon l'une quelconque des revendications 9 à 11, dans lequel le copolymère de styrène-butadiène modifié avec un groupe fonctionnel à base d'amine est obtenu par la réaction des extrémités actives d'un copolymère de styrène-butadiène avec un composé ayant un groupe amino protégé et un groupe hydrocarbyloxysilane dans une molécule pour modifier le copolymère, suivi de la conduite d'une réaction de condensation impliquant ledit composé en une présence d'un accélérateur de condensation à base de titane comprenant un composé de titane.

13. Pneumatique ayant une bande de roulement qui contient une composition de caoutchouc pour une bande de roulement selon la revendication 12, dans lequel l'accélérateur de condensation à base de titane est au moins un composé sélectionné parmi les alcoxydes, les sels d'acide carboxylique et les sels complexes d'acétylacétonate de titane.

14. Pneumatique ayant une bande de roulement qui contient une composition de caoutchouc pour une bande de roulement selon l'une quelconque des revendications 1 à 13, dans lequel la composition de caoutchouc comprend (C) un agent de couplage silane en une quantité de 2 à 20 % en masse sur la base d'une quantité de la silice du composant (B).

15. Pneumatique ayant une bande de roulement qui contient une composition de caoutchouc pour une bande de roulement selon la revendication 14, dans lequel l'agent de couplage silane du composant (C) est représenté par la formule générale suivante (IV):
R¹⁴ₓR¹⁵_{y}R¹⁶_{Z}SiR¹⁷-S-CO-R¹⁸ (IV)
dans laquelle R¹⁴ représente un groupe représenté par R¹⁹O-, R¹⁹C(=O)O-, R¹⁹R²⁰C=NO-, R¹⁹R²⁰N- ou -(OSiR¹⁹R²⁰)ₘ(OSiR¹⁸R¹⁹R²⁰), R¹⁹ et R²⁰ représentant chacun indépendamment un atome d'hydrogène ou un groupe hydrocarbure monovalent ayant 1 à 18 atome(s) de carbone; R¹⁵ représente un groupe représenté par R¹⁴, un atome d'hydrogène ou un groupe hydrocarbure monovalent ayant 1 à 18 atome(s) de carbone; R¹⁶ représente un groupe représenté par R¹⁴ ou R¹⁵ ou un groupe représenté par - [O(R²¹O)ₐ]_{0,5}-, R²¹ représentant un groupe alcylène ayant 1 à 18 atome(s) de carbone, et a représentant un nombre entier d'une valeur de 1 à 4; R¹⁷ représente un groupe hydrocarbure divalent ayant 1 à 18 atome(s) de carbone; R¹⁸ représente un groupe hydrocarbure monovalent ayant 1 à 18 atome(s) de carbone; et x, y et z représentent des nombres satisfaisant les relations de x + y + 2z = 3, 0 ≦ x ≦ 3, 0 ≦ y ≦ 2 et 0 ≦ z ≦ 1.

16. Pneumatique ayant une bande de roulement qui contient une composition de caoutchouc pour une bande de roulement selon l'une quelconque des revendications 1 à 15, dans lequel la composition de caoutchouc comprend en outre (D) du noir de carbone.
